# EUROPÄISCHE PATENTANMELDUNG

(11) **EP 3 537 323 A1**
(43) Veröffentlichungstag der Anmeldung: **11.09.2019**
(21) Anmeldenummer: 18160968.6
(22) Anmeldetag: 09.03.2018
(51) Int. Cl.: G06F 21/33, G06F 21/44, H04L 9/32

(54) **PROJEKTBEZOGENES ZERTIFIKATSMANAGEMENT**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Softwareinventar und eine Zertifizierungsstelle aufweist, das Verfahren folgende Schritte umfassend: a) Im Rahmen einer Authentifizierung des Geräts innerhalb des Leitsystems Ermittlung von Informationen durch den wenigstens einen lokalen Registrierungsdienst, dahingehend, welche Kommunikationsprotokolle und/oder Anwendungen von dem Gerät unterstützt werden und/oder aktiv sind; b) Anforderung eines projektbezogenen Gerätezertifikats bei der ersten Hierarchie der Zertifizierungsstelle durch den lokalen Registrierungsdienst; c) Hinterlegung des projektbezogenen Gerätezertifikats in einem dem Engineering-Projekt zugeordneten Teilinventar des Software-Inventars des Leitsystems.

## Beschreibung

Die Erfindung betrifft ein Leitsystem für eine technische Anlage nach Anspruch 1. Außerdem betrifft die Erfindung Verfahren zur Authentifizierung von Geräten in einem Leitsystem nach den Ansprüchen 6, 7 und 8. Zudem betrifft die Erfindung eine Verwendung eines Leitsystems zum Betrieb einer technischen Anlage nach Anspruch 9.

Im Kontext einer industriellen, technischen Anlage kommen zur Laufzeit sogenannte operative Zertifikate zum Einsatz. Durch die Verwendung der operativen Zertifikate kann eine Authentifikation und eine Kommunikationsintegrität von Kommunikationsteilnehmern in einem Leitsystem der industriellen, technischen Anlage durch kryptographische Mittel erreicht werden.

Ein in einem Gerät sicher hinterlegter, privater Schlüssel wird dabei an einen zugehörigen öffentlichen Schlüssel gebunden. Dabei erlangt eine automatisierte Unterstützung der Abläufe für eine Verwaltung der operativen Zertifikate und den dazugehörigen kryptographischen Schlüsseln im Kontext einer Public Key Infrastruktur (PKI), insbesondere als Basis für eine sichere Kommunikation zwischen Applikationen und Geräten innerhalb der technischen Anlage, zunehmend eine höhere Bedeutung.

Durch eine Reduktion von manuellen Aktionen im Rahmen der Zertifikatsverwaltung und zunehmend automatisierte Abläufe auf Basis vom Standardprotokollen, insbesondere zum Ausrollen und Erneuern von Zertifikaten, können eine Flexibilität und Interoperabilität im Kontext der industriellen Anlage erhöht werden.

Üblicherweise wird die automatisierte Verwaltung von operativen Zertifikaten im Anlagenkontext unter Verwendung eines Standardprotokolls, beispielsweise des Certificate Management Protokolls (CMP), realisiert. Dabei fordern die Geräte und Applikationen die erforderlichen operativen Zertifikate situationsbedingt von einem lokalen Registrierungsdienst, einer sogenannten Local Registration Authority (LRA), an. Dies erfolgt beispielsweise im Fall einer Erneuerung, die aufgrund eines Ablaufs oder eines Widerrufs des Zertifikats notwendig ist.

Dabei senden die Geräte und Applikationen eine Anfrage an den lokalen Registrierungsdienst, den sogenannten Certificate Signing Request (CSR). Der lokale Registrierungsdienst prüft die Anforderung, indem er zuerst eine Signatur, mit der die Anforderung signiert ist, auf Gültigkeit überprüft. Anschließend prüft er, ob ein Gerätezertifikat, eine Seriennummer und ggf. weitere Identifikationsmerkmale der Geräte bzw. der Applikationen in einem Software-Inventar des Leitsystems der technischen Anlage, dem sogenannten Inventory, hinterlegt ist. Im Falle einer erfolgreichen Prüfung wird die Anforderung an die sogenannte Certification Authority (CA) oder Zertifizierungsinstanz weitergeleitet, die ein operatives Zertifikat für das Gerät bzw. die Applikation ausstellt.

Ist ein Gerätezertifikat für ein Gerät in dem Leitsystem hinterlegt und das Gerät als vertrauenswürdig erkannt, so kann zum jetzigen Stand der Technik das Gerät innerhalb jedes beliebigen Engineering-Projektes in einem vollen Umfang genutzt werden, der ihm gemäß seinem in dem Leitsystem hinterlegten Zertifikat zusteht. Unter einem Engineering-Projekt wird dabei im vorliegenden Rahmen eine Automatisierungsaufgabe für einen Teil einer industriellen Anlage (oder für die gesamte Anlage) verstanden. Beispielsweise kann es sich dabei um die Vorgänge "Beobachten, Bedienen, Verändern etc." handeln.

Wurde beispielsweise im Kontext eines Projektes ein gültiges, von einer vertrauenswürdigen Zertifizierungsinstanz einer industriellen Anlage ausgestelltes Webserver-Zertifikat an den Webserver einer Automatisierung AS1 gebunden, kann dieses Zertifikat zum erfolgreichen, von einem Benutzer im Kontext eines Projektes 2 initiierten Verbindungsaufbau zum Diagnosepuffer unter Verwendung von HTTPS verwendet werden. Da das Webserver-Zertifikat von einer anlagenweit und projetübergreifend als vertrauenswürdig geltenden Zertifizierungsinstanz der industriellen Anlage ausgestellt wurde, kommt es bei dem durch den Verbindungsaufbau standardmäßig angestoßenen Authentifizierungsvorgang erfolgreich zum Einsatz. Das bedeutet: Der Webserver der AS1 authentifiziert sich anhand des Zertifikats und der zugehörigen anlagenweit und projektübergreifend gültigen Zertifikatskette erfolgreich gegenüber dem Webclient, der in diesem Fall durch den Benutzer/ Webbrowser im Kontext des Projektes 2 repräsentiert ist. Dies wird dadurch ermöglicht, dass der Client das Webserver-Zertifikat erfolgreich validieren kann, da ihm (wie allen anderen Anlagenbenutzern und -geräten) alle für die Validierung des Zertifikats notwendigen Daten vorliegen.

Dadurch wird der Zugriff auf den Webserver der AS1 ermöglicht, auch wenn dieser Zugriff im Kontext des Projektes 2 nicht vorgesehen, nicht erwünscht und grundsätzlich vermieden werden sollte.

Auch in einem Kontext des Kommunikationsprotokolls OPC UA (Open Platform Communications Unified Architecture) besteht aufgrund der Tatsache, dass ein OPC UA Server der AS1 über ein gültiges im Kontext des Projektes 1 bezogenes Server-Zertifikat verfügt, die Gefahr, dass ein (im Projekt 2 dafür nicht berechtigter) OPC UA-Client erfolgreich eine zertifikatsbasierte Verbindung zu dem OPC UA-Server der Automatisierung AS1 herstellt.

Der Erfindung liegt die Aufgabe zugrunde, die für eine ausschließliche Verwendung im Kontext eines bestimmten Engineering-Projektes vorgesehenen operativen Zertifikate sowie eine dazugehörige Infrastruktur eines Leitsystems für eine industrielle Anlage so zu gestalten, dass die operativen Zertifikate nur im Kontext vorherbestimmter weiterer Engineering-Projekte als gültig validiert werden können.

Diese Aufgabe wird gelöst durch ein Leitsystem für eine technische Anlage nach Anspruch 1. Außerdem wird die Aufgabe gelöst durch ein Verfahren zur Authentifizierung von Geräten in einem Leitsystem nach den Ansprüchen 6, 7 und 8. Zudem wird die Aufgabe gelöst durch eine Verwendung eines Leitsystems zum Betrieb einer technischen Anlage nach Anspruch 9. Vorteilhafte Weiterbildungen ergeben sich aus den abhängigen Ansprüchen.

Ein erfindungsgemäßes Leitsystem für eine technische Anlage der eingangs beschriebenen Art umfasst einen lokalen Registrierungsdienst, der zur Authentifizierung von Geräten in dem Leitsystem ausgebildet ist, ein Software-inventar, das zur Hinterlegung von Informationen bezüglich der Authentifizierung der Geräte ausgebildet ist und eine Zertifizierungsstelle zur Ausstellung von Zertifikaten für die Geräte.

Das erfindungsgemäße Leitsystem ist dadurch gekennzeichnet, dass das Softwareinventar eine Mehrzahl an Teilinventaren aufweist, in welchen jeweils voneinander unabhängige Informationen bezüglich der Authentifizierung der Geräte eines bestimmten Engineering-Projektes projektbezogen hinterlegbar sind,
und dass der lokale Registrierungsdienst zu einer projektbezogenen Registrierung eines Gerätes und Hinterlegung des Gerätes in einem dem jeweiligen Engineering-Projekt zugeordneten, projektbezogenen Teilinventar des Softwareinventars ausgebildet ist,
und dass die Zertifizierungsstelle projektbezogen ausgebildet ist und zwei Hierarchien aufweist, wobei eine erste Hierarchie dazu ausgebildet und vorgesehen ist, projektbezogene Gerätezertifikate für die Geräte auszustellen, und wobei eine zweite Hierarchie dazu ausgebildet und vorgesehen ist, projektbezogene operative Zertifikate für die Geräte auszustellen.

Durch die erfindungsgemäße Ausbildung des Leitsystems ist dieses in der Lage, für eine ausschließliche Verwendung im Kontext eines bestimmten Engineering-Projektes vorgesehene operative Zertifikate so zu gestalten, dass diese im Kontext keines weiteren oder nur vorherbestimmter weiterer Engineering-Projekte als gültig validiert werden können. Unter einem Engineering-Projekt wird dabei in diesem Zusammenhang eine Automatisierungsaufgabe für einen Teil einer industriellen Anlage (oder für die gesamte Anlage) verstanden. Beispielsweise kann es sich dabei um die Vorgänge "Beobachten, Bedienen, Verändern etc." handeln. Die operativen Zertifikate können jedoch weiterhin gemäß dem X.509 Standard (auch bekannt als ISO/IEC 9594-8) ausgestellt werden.

Eine projektbezogene Ausbildung der Zertifizierungsstelle meint dabei, dass die Zertifizierungsstelle dazu ausgebildet ist, für jedes Engineering-Projekt als eine eigenständige Zertifizierungsstelle zu agieren. In dem Fall, dass eine im Kontext eines bestimmten Engineering-Projektes verwendete Zertifizierungsstelle kompromittiert wird, kann die (noch auf andere Engineering-Projekte bezogene) Zertifizierungsstelle des Leitsystems im Kontext der anderen Engineering-Projekte weiterhin als vertrauenswürdig gelten. Die zugehörigen Engineering-Projekte sind somit von der Kompromittierung nicht betroffen.

Beispielhaft wird im Fall von mehreren im Verbund arbeitenden modularen industriellen Anlagen durch jede Anlage ein dediziertes Engineering Projekt projektiert. Alle diese Anlagen wurden dabei getrennt projektiert (ggf. auch mit unterschiedlichen Engineering Systemen). Für die Zusammenarbeit im Verbund werden einige Geräte von mehreren Projekten verwendet. In einem angenommenen Fall wird eine Automatisierung AS1 in einem ersten Projekt P1 der modularen Anlage A1 projektiert und automatisiert dort einen verfahrenstechnischen Prozess. Für die Zusammenarbeit im Verbund werden einige Prozessdaten der Automatisierung AS1 für ein Bedienen und Beobachten in einem zweiten Engineering-Projekt P2 verwendet - es existieren beispielswese im Engineering-Projekt P2 Anlagenbilder, die durch die Automatisierung AS1 dynamisiert werden. Dazu sind dedizierte Zugriffe auf die Automatisierung AS1 aus dem Projekt P2 erforderlich.

Mittels des erfindungsgemäßen Leitsystems können die im Kontext des Engineering-Projekts P1 zu realisierende Projektierung, Wartung und Pflege (Systemmeldungen) durch die entsprechenden auf das Engineering-Projekt P1 bezogenen (d.h. "Engineering-Projekt P1 exklusive") operativen Gerätezertifikate geregelt werden. Dasselbe gelte für ein "detailliertes Bedienen und Beobachten" - z.B. für das Verstellen von Reglerparametern. Ein "einfaches" Bedienen und Beobachten" soll beispielsweise auch im Verbund mit einer anderen Anlage aus einem anderen Projekt möglich sein - hierfür hat das Leitsystem in diesem Beispiel die auf das Engineering-Projekt P2 bezogenen (d.h. "Engineering-Projekt 2 exklusive") operativen Gerätezertifikate ausgestellt.

Durch die erfindungsgemäße Ausbildung des Leitsystems kann ein versehentlicher oder vorsätzlicher Missbrauch von operativen Zertifikaten im Kontext eines "falschen" Engineering-Projektes effektiv verhindert werden.

Das erfindungsgemäße Leitsystem ermöglicht eine flexible Anbindung an state-of-the-art CA (Certification Authority) - Produkte und unterstützt - aufgrund der möglichen Nutzung von Standardprotokollen zum Zertifikatsmanagement - alle gängigen Certificate Management Use Cases (insb. Bootstrapping, Update, Revocation, Hardware Exchange). Somit ist das Leitsystem konform zu PKI (Public Key Infrastructure) - relevanten Anforderungen der Norm IEC62443 als des führenden internationalen Security-Standards für die industrielle Automatisierung.

Das erfindungsgemäße Leitsystem ermöglicht zudem eine Erneuerung von operativen Zertifikaten und eine durch die Zertifikate unterstützte Gerätetausch zur Laufzeit einer industriellen Anlage ohne Anlagenstoß und anschließenden Neustart des Softwareinventars und der Zertifizierungsstelle. Dadurch wird ein wesentlicher Beitrag zur Anlagenverfügbarkeit geleistet.

Bei einer vorteilhaften Weiterbildung des Leitsystems umfasst dieses wenigstens ein Prozessdatenarchiv, wobei das Softwareinventar in dem Prozessdatenarchiv integriert ist. Das Prozessdatenarchiv wird auch als Process Historian bezeichnet. Das Prozessdatenarchiv ist als Datenquelle innerhalb des Leitsystems besonders gut geeignet, da es hochverfügbar ausgelegt ist.

Bevorzugt weist das Leitsystem zusätzlich wenigstens eine Engineering-Komponente und/oder wenigstens ein Bediensystem, eine sogenannte Operator Station (OS), auf. Bei dem Bediensystem kann es sich, ohne sich darauf zu beschränken, um eine SIMATIC PCS 7 Industrial Workstation handeln. Dabei ist der lokale Registrierungsdienst in der Engineering-Komponente und/oder dem Bediensystem bzw. dem zum Bediensystem dazugehörigen Server integriert. Es ist somit nicht erforderlich, für die Implementierung des lokalen Registrierungsdienstes zusätzliche (Hardware-)Komponenten zu verwenden. Vielmehr kann der lokale Registrierungsdienst in eine vorhandene Architektur eines Leitsystems einer technischen Anlage integriert werden. Somit ist keine zusätzliche Hardware vonnöten, was das Investitionsvolumen für ein derartiges verbessertes Leitsystem gering hält.

Vorteilhafterweise werden in dem Software-Inventar des Leitsystems Informationen bezüglich der Konfiguration des Leitsystems und/oder der mit dem Leitsystem betriebenen technischen Anlage hinterlegt. Die Informationen können dabei aus einer Engineering-Komponente, einer sogenannten Engineering Station (ES), des Leitsystems ausgelesen werden. Bei der Engineering-Komponente kann es sich, ohne sich darauf zu beschränken, um eine SIMATIC PCS 7 Industrial Workstation handeln. Änderungen in der Konfiguration des Leitsystems werden vorteilhafterweise zur Laufzeit der technischen Anlage unverzüglich in dem Software-Inventar abgebildet.

Bei einer vorteilhaften Weiterbildung des erfindungsgemäßen Leitsystems umfasst jede der beiden Hierarchien der Zertifizierungsstelle jeweils eine Stammzertifizierungsstelle und eine Ausstellungszertifizierungsstelle. Hierdurch lässt sich das Ausstellen der Zertifikate besonders einfach und sicher gestalten.

Bevorzugt weisen die von der ersten Hierarchie der Zertifizierungsstelle ausstellbaren Gerätezertifikate eine eindeutige Projektkennung auf. Dadurch ist das Leitsystem dazu ausgebildet, einfach zu erkennen, im Kontext welches Engineering-Projektes eine Anfrage an die Zertifizierungsstelle erfolgt.

Beispielhaft wird angenommen, dass aus verschiedenen Engineering-Projekten heraus für ein und dasselbe Automatisierungsgerät operative Zertifikate durch den lokalen Registrierungsdienst von der Zertifizierungsstelle angefordert werden. Dabei sind die operativen Zertifikate durch eine eindeutige Projektkennung (Projekt-ID) gekennzeichnet, so dass ein Automatisierungsgerät projektspezifisch Dienste anbieten oder ablehnen kann.

Falls eine Anlagenkomponente, z.B. die Automatisierung AS (Teil einer Package Unit), in Engineering-Projekten P3 und P4 eingesetzt wird, wird sie in den zugehörigen Teilinventaren des Software-Inventars hinterlegt. Anschließend erhält die Anlagenkomponente im Rahmen der Registrierung projektspezifische operative Zertifikate. Über die projektspezifischen operativen Zertifikate kann beispielsweise geregelt werden, dass das Engineering-Projekt P3 auf der Automatisierung AS bedienen und beobachten darf (Monitoring & Control) und das Engineering-Projekt P4 lediglich bedienen darf (Monitoring).

Meldet sich nun ein Gerät (beispielhaft ein Server) aus dem Kontext des Engineering-Projekts P4 bei der Automatisierung AS an, so wird bei der Authentifizierung die Projektkennung mit übergeben, so dass in Folge dessen das projektspezifische operative Zertifikat für die verschlüsselte Kommunikation übergeben werden kann. Dadurch wird eine starke Abgrenzung zwischen den Projekten ermöglicht und jeglicher Missbrauch der im Kontext eines Engineering-Projektes erteilten Zertifikate bzw. erlaubten Kommunikationsbeziehungen im Kontext des anderen Engineering-Projektes ausgeschlossen.

Die obige Aufgabe wird zudem gelöst durch ein Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Softwareinventar und eine Zertifizierungsstelle aufweist, das Verfahren folgende Schritte umfassend:
a) Im Rahmen einer Authentifizierung des Geräts innerhalb des Leitsystems Ermittlung von Informationen durch den wenigstens einen lokalen Registrierungsdienst, dahingehend, welche Kommunikationsprotokolle und/oder Anwendungen von dem Gerät unterstützt werden und/oder aktiv sind;
b) Anforderung eines projektbezogenen Gerätezertifikats bei der ersten Hierarchie der Zertifizierungsstelle durch den lokalen Registrierungsdienst;
c) Hinterlegung des projektbezogenen Gerätezertifikats in einem dem Engineering-Projekt zugeordneten Teilinventar des Software-Inventars des Leitsystems.

Die Aufgabe wird zudem gelöst durch ein Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Software-Inventar und eine Zertifizierungsstelle aufweist, das Verfahren folgende Schritte umfassend:
a) Anforderung eines operativen Zertifikats durch ein Gerät bei dem lokalen Registrierungsdienst;
b) Prüfung durch den lokalen Registrierungsdienst, ob für das die Anforderung stellende Gerät im Rahmen des Engineering-Projekts, in dem das Gerät die Anforderung stellt, ein entsprechendes projektbezogenes Gerätezertifikat in einem dem Engineering-Projekt zugeordneten Teilinventar des Software-Inventars des Leitsystems hinterlegt ist;
c) Anforderung eines projektbezogenen operativen Zertifikats bei der ersten Hierarchie der Zertifizierungsstelle durch den lokalen Registrierungsdienst;
d) Weiterleitung des projektbezogenen operativen Zertifikats an das Gerät.

Außerdem wird die Aufgabe gelöst durch ein Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Software-Inventar und eine Zertifizierungsstelle aufweist, das Verfahren folgende Schritte umfassend:
a) Im Rahmen einer Authentifizierung des Geräts innerhalb des Leitsystems Ermittlung von Informationen durch den wenigstens einen lokalen Registrierungsdienst, dahingehend, welche Kommunikationsprotokolle und/oder Anwendungen von dem Gerät unterstützt werden und/oder aktiv sind;
b) Anforderung eines projektbezogenen Gerätezertifikats bei der ersten Hierarchie der Zertifizierungsstelle durch den lokalen Registrierungsdienst;
c) Hinterlegung des projektbezogenen Gerätezertifikats in einem dem Engineering-Projekt zugeordneten Teilinventar des Software-Inventars des Leitsystems;
d) Anforderung eines projektbezogenen operativen Zertifikats durch ein Gerät bei dem lokalen Registrierungsdienst;
e) Prüfung durch den lokalen Registrierungsdienst, ob für das die Anforderung stellende Gerät im Rahmen des Engineering-Projekts, in dem das Gerät die Anforderung stellt, ein entsprechendes projektbezogenes Gerätezertifikat in einem dem Engineering-Projekt zugeordneten Teilinventar des Software-Inventars des Leitsystems hinterlegt ist;
f) Anforderung eines projektbezogenen operativen Zertifikats bei der ersten Hierarchie der Zertifizierungsstelle durch den lokalen Registrierungsdienst;
g) Weiterleitung des projektbezogenen operativen Zertifikats an das Gerät.

Im Zuge einer bevorzugten Verwendung kann das Leitsystem zum Betrieb einer technischen Anlage eingesetzt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein Schema von projektabhängigen Berechtigungen für Nutzer und Geräte innerhalb eines Leitsystems; und
- FIG 2: eine Prinzipskizze eines erfindungsgemäßen Leitsystems.

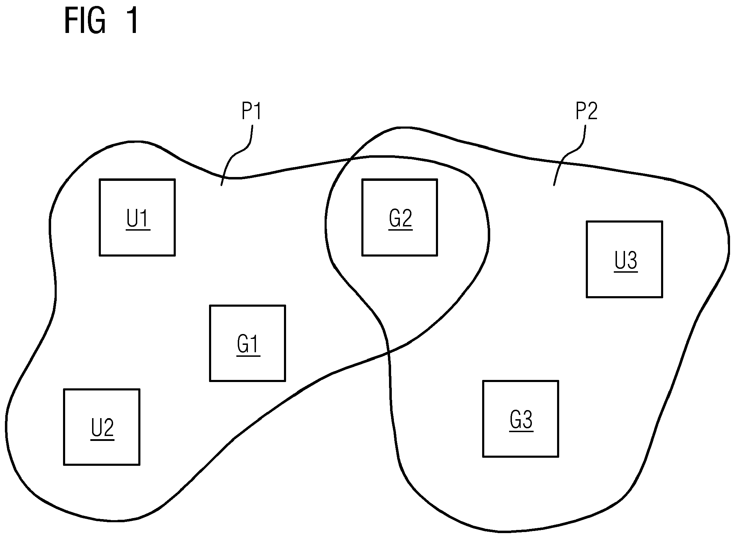

In FIG 1 sind schematisch Benutzungsrechte bzw. Zugriffsrechte einzelner Benutzer U1, U2, U3 und Geräte G1, G2, G3 innerhalb eines nicht dargestellten Leitsystems 1 veranschaulicht.

Im Rahmen eines ersten Engineering-Projekts P1 sind zwei Benutzer U1, U2 und zwei Geräte G1, G2 berechtigt. Unter einem Engineering-Projekt wird dabei eine Automatisierungsaufgabe für einen Teil einer industriellen Anlage (oder für die gesamte Anlage) verstanden. Beispielsweise kann es sich dabei um die Vorgänge "Beobachten, Bedienen, Verändern etc." handeln.

Im Rahmen eines zweiten Engineering-Projekts P2 sind nur ein dritter Benutzer U3 und zwei Geräte G2, G3 berechtigt. Wie das Beispiel des Geräts G3 zeigt, können Nutzer oder Geräte auch in mehreren Engineering-Projekten P1, P2 berechtigt sein.

Durch die Erfindung wird dabei sichergestellt, dass ein Nutzer oder ein Gerät, das sich innerhalb eines Engineering-Projekts P1, P2 erfolgreich gegenüber dem Leitsystem 1 authentifiziert hat, nicht automatisch auch über entsprechende Berechtigungen im Rahmen eines anderen Engineering-Projekts P1, P2 verfügt.

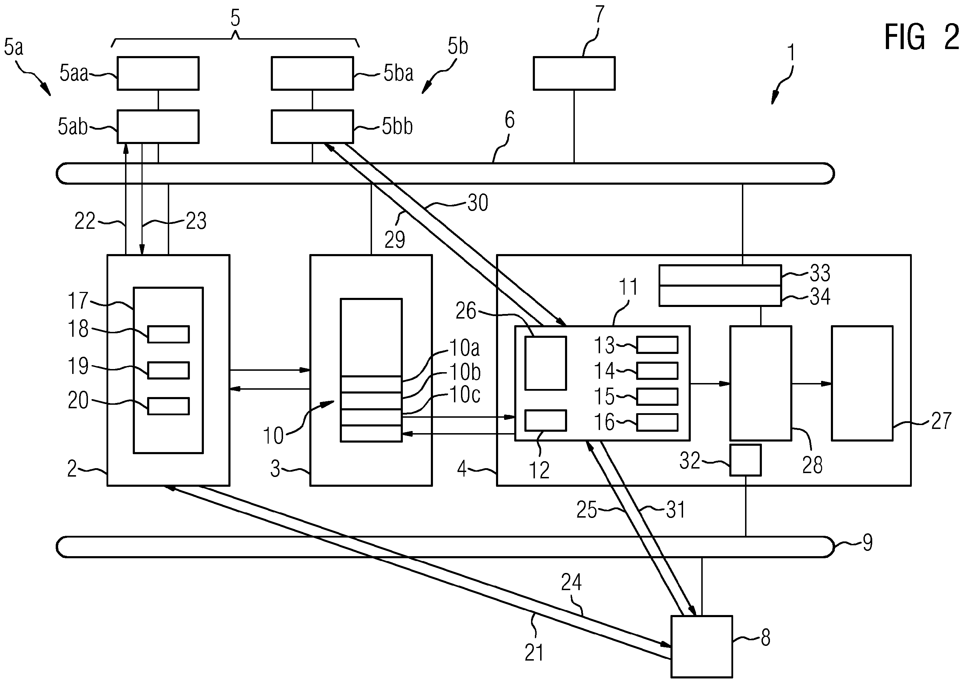

In der FIG 2 ist ein erfindungsgemäßes Leitsystem 1 einer technischen Anlage dargestellt. Das Leitsystem 1 umfasst eine Engineering-Komponente bzw. eine Engineering Station 2, ein Prozessdatenarchiv bzw. einen Process Historian 3, einen Server eines Bediensystems bzw. einen Operator System Server 4 und eine Zertifizierungsstelle bzw. eine Certification Authority 5. Die Engineering Station 2, der Process Historian 3, der Operator System Server 4 und die Zertifizierungsstelle 5 stehen über einen Terminalbus 6 miteinander in Verbindung.

Ein Benutzer bzw. Client 7 steht mittels des Terminalbusses 6 mit den zuvor genannten vier Komponenten in Verbindung. Der Terminalbus 6 kann, ohne sich darauf zu beschränken, beispielsweise als Industrial Ethernet ausgebildet sein. Die Zertifizierungsstelle 5 weist eine erste Hierarchie 5a und eine zweite Hierarchie 5b auf. Die erste Hierarchie 5a ist dazu ausgebildet und vorgesehen, projektbezogene Gerätezertifikate für Geräte 8 auszustellen. Dazu umfasst die erste Hierarchie 5a der Zertifizierungsstelle 5 eine Stammzertifizierungsstelle 5aa und eine Ausstellungszertifizierungsstelle 5ab. Analog dazu umfasst die zweite Hierarchie 5b der Zertifizierungsstelle 5 eine Stammzertifizierungsstelle 5ba (Root CA) und eine Ausstellungszertifizierungsstelle 5bb (Issuing CA).

Die Stammzertifizierungsstellen 5aa, 5ba der beiden Hierarchien 5a, 5b sind dabei voneinander unabhängig. Die erste Hierarchie 5a der Zertifizierungsstelle 5 ist dazu ausgebildet und vorgesehen, projektabhängige Gerätezertifikate auszustellen. Die zweite Hierarchie 5b der Zertifizierungsstelle 5 ist dazu ausgebildet und vorgesehen, projektabhängige operative Zertifikate auszustellen.

Die Zertifizierungsstelle 5 ist dazu ausgebildet, abhängig von dem Engineering-Projekt, im Rahmen dessen eine Anforderung an die Zertifizierungsstelle 5 bezüglich eines Zertifikats erfolgt, projektabhängige Gerätezertifikate und operative Zertifikate zu vergeben.

An den Operator System Server 4 ist ein Gerät 8 mittels eines Anlagenbusses 9 angeschlossen. Bei dem angeschlossenen Gerät 8 kann es sich dabei alternativ auch um eine Applikation, insbesondere Webapplikation, handeln. Im Rahmen der Erfindung kann eine beliebige Zahl an Geräten und/oder Applikationen an den Operator System Server 4 angeschlossen sein. Der Anlagenbus 9 kann, ohne sich darauf zu beschränken, beispielsweise als Industrial Ethernet ausgebildet sein. Das Gerät 8 kann wiederum mit einer beliebigen Anzahl an Subsystemen (nicht dargestellt) verbunden sein.

In dem Process Historian 3 bzw. Prozessdatenarchiv ist ein Softwareinventar bzw. ein Inventory 10 integriert. Das Softwareinventar 10 umfasst eine Mehrzahl an Teilinventaren 10a, 10b, 10c. In dem Operator System Server 4 ist ein erster lokaler Registrierungsdienst 11 integriert. Der lokale Registrierungsdienst 11 des Operator System Servers 4 weist als Unterdienste einen Manager-Dienst 12, einen Status-Dienst 13, einen Notifier-Dienst 14, einen Distribution-Dienst 15 und einen Registration-Dienst 16 auf, deren Funktionsweise und Aufgaben nachfolgend erläutert werden. Weiterhin umfasst der lokale Registrierungsdienst 11 einen lokalen Datenspeicher 26. Der lokale Registrierungsdienst 11 kann alternativ oder zusätzlich in dem Engineering System 2 integriert sein.

In der in Figur 1 dargestellten Ausführungsform des Leitsystems 1 ist die Variante eines separaten, zweiten lokalen Registrierungsdienstes 17 dargestellt. Der zweite lokale Registrierungsdienst 17 ist in dem Engineering System 2 integriert. Dieser umfasst als Unterdienste einen Registration-Dienst 18, einen Configuration-Dienst 19 und einen Distribution-Dienst 20, deren Funktionsweise und Aufgaben ebenfalls nachfolgend erläutert werden.

Alle in der technischen Anlage integrierten Geräte 8 bzw. Applikationen müssen sich bei einer Inbetriebnahme der technischen Anlage gegenüber dem lokalen Registrierungsdienst 17 des Engineering Systems 2 authentifizieren, um als vertrauenswürdige Kommunikationsteilnehmer registriert zu sein. Hierzu sendet vorliegend das Gerät 8 eine Anforderung 21 zur Erstellung eines Gerätezertifikats (Device Certificate), einen sogenannten Certificate Signing Request (CSR). Dieser enthält eine eindeutige Projektkennung des Engineering-Projekts, im Rahmen dessen die Anforderung 21 erfolgt.

Die Anforderung 21 des Gerätes 8 wird mittels des Registration-Dienstes 18 des lokalen Registrierungsdienstes 17 des Engineering Systems 2 an die erste Hierarchie 5a der Zertifizierungsstelle 5 weitergebeben. Dabei fordert der die Ausstellungszertifizierungsstelle 5ab der ersten Hierarchie 5a ein entsprechendes Zertifikat 5aa bei der Stammzertifizierungsstelle 5ab an.

Neben der eigentlichen Authentifizierung des Gerätes 8 wird zusätzlich ermittelt, welche Kommunikationsprotokolle bzw. Anwendungen von dem Gerät 8 unterstützt werden. Hierbei prüft der lokale Registrierungsdienst 17 des Engineering Systems 2 unter Zuhilfenahme von Informationen aus dem Inventory 10 des Process Historians 3 zunächst, welche Geräte/Applikationen 5 als vertrauenswürdige Kommunikationsteilnehmer registriert sind sowie welche Zertifikate dem Gerät 8 im Rahmen eines Engineering-Projektes zustehen. Dies setzt voraus, dass im Inventory 10 hinterlegt ist, welche Protokolle und Anwendungen von den in der technischen Anlage integrierten Geräten/Applikationen 8 aktiv unterstützt werden. Diese Prüfung hat zur Folge, dass dem Gerät 8 nur die Zertifikate zur Verfügung gestellt werden, die es zur Nutzung eines bestimmten Protokolls, beispielsweise HTTPS, Secure Syslog oder OPC UA, bzw. einer bestimmten Anwendung benötigt.

Darauffolgend prüft der lokale Registrierungsdienst 17 des Engineering Systems 2 zusätzlich, ob das Gerät 8 die von ihm prinzipiell unterstützten Zertifikate auch tatsächlich benötigt. Hierzu ermittelt der Configuration-Dienst 19 des lokalen Registrierungsdienstes 17 des Engineering Systems 2 eine Netzwerkkonfiguration der technischen Anlage, einschließlich der Kommunikationsbeziehungen zwischen einzelnen Komponenten der technischen Anlage, und prüft, ob das Gerät 8 die Kommunikationsbeziehungen auch aktiv nutzt und damit die entsprechenden Zertifikate auch tatsächlich benötigt.

Nur im Fall einer erfolgreichen Prüfung bezieht der lokale Registrierungsdienst 17 des Engineering Systems 2 stellvertretend für das Gerät 8 das entsprechende projektabhängige Gerätezertifikat mittels eines entsprechenden Certification Signing Requests 22 und einer Zuweisung 23 von der ersten Hierarchie 5a der Zertifizierungsstelle 5. Das projektabhängige Gerätezertifikat wird abschließend von dem Distribution-Dienst 20 des lokalen Registrierungsdienstes 17 des Engineering Systems 2 über eine Zuweisung 24 an das Gerät 8 übermittelt. Zusätzlich wird das projektabhängige Gerätezertifikat in einem dem Engineering-Projekt zugewiesenen Teilinventar 10a, 10b, 10c des Softwareinventars 10 hinterlegt. Eine Zuweisung des Gerätezertifikats erfolgt damit nur im Bedarfsfall und abhängig von dem Engineering-Projekt, im Rahmen dessen die Authentifizierung des Geräts 8 gegenüber dem Leitsystem 1 erfolgt.

Es kommt häufig vor, dass zur Laufzeit der technischen Anlage das Engineering System 2 nicht oder nicht ständig zur Verfügung steht. Dazu ist in dem Operator System Server 4 der erste lokale Registrierungsdienst 11 integriert. Dessen Funktionsweise ähnelt der des zweiten, zuvor erläuterten Registrierungsdienstes 17 im Engineering System 2. Das Verfahren zur Authentifizierung von Geräten/Applikationen 8 bzw. zur Vergabe von Zertifikaten an diese zur Laufzeit der technischen Anlage unterscheidet sich von der zuvor erläuterten Authentifizierung bei Inbetriebnahme der technischen Anlage im Wesentlichen dadurch, dass er ereignisgesteuert initiiert wird. Ein solches Ereignis stellt beispielsweise, ohne sich darauf zu beschränken, ein Gerätetausch während der Laufzeit dar.

Der Manager-Dienst 12 des lokalen Registrierungsdienstes 11 lädt die für eine Prüfung des von dem ausgetauschten Gerät 8 gestellten Certification Signing Requests 25 notwendigen Informationen aus dem entsprechenden Teilinventar 10a, 10b, 10c des Softwareinventars 10. Um das richtige Teilinventar 10a, 10b, 10c auswählen zu können, enthält die Anforderung 25 eine eindeutige Projektkennung des Engineering-Projekts, im Rahmen dessen die Anforderung 25 erfolgt. Die in dem Teilinventar 10a, 10b, 10c hinterlegten Daten werden in den Datenspeicher 26 des lokalen Registrierungsdienstes 11 geladen.

Darauffolgend ermittelt der Manager-Dienst 12 zunächst, welche Geräte/Applikationen 8 als vertrauenswürdige Kommunikationsteilnehmer registriert sind sowie welche Zertifikate dem Gerät 8 zustehen. Zudem prüft der Manager-Dienst 12, ob das Gerät 8 über ein entsprechendes projektbezogenes Gerätezertifikat im Kontext des Engineering-Projektes verfügt, im Rahmen dessen die Anforderung 25 erfolgte.

Diese Prüfung hat analog zum Verfahren bei Inbetriebnahme der technischen Anlage zur Folge, dass dem Austauschgerät 8 nur das operative Zertifikate zur Verfügung gestellt werden darf, die es zur Nutzung eines bestimmten Protokolls, beispielsweise HTTPS, Secure Syslog oder OPC UA, bzw. einer bestimmten Anwendung im Rahmen eines bestimmten Engineering-Projekts benötigt und die ihm zugewiesen werden dürfen.

Zusätzlich prüft der Manager-Dienst 12, ob das Austauschgerät 8 die von ihm prinzipiell unterstützten operativen Zertifikate auch tatsächlich benötigt. Hierzu ermittelt er eine aktuelle Netzwerkkonfiguration der technischen Anlage, einschließlich der Kommunikationsbeziehungen zwischen einzelnen Komponenten der technischen Anlage, und prüft, ob das Austauschgerät 8 die Kommunikationsbeziehungen auch aktiv nutzt und damit die entsprechenden operativen Zertifikate auch tatsächlich benötigt.

Die Informationen über die Kommunikationsbeziehungen bzw. die Netzwerkkonfiguration der technischen Anlage erhält der Manager-Dienst 12 aus einem Konfigurationsprozess 27 einer Laufzeitumgebung 28 des Operator System Servers 4. Die Informationen werden durch den Manager-Dienst 12 anschließend in dem jeweiligen projektbezogenen Teilinventar 10a, 10b, 10c des Softwareinventars 10 des Process Historians 3 hinterlegt. Der Manager-Dienst 12 kann neben den zuvor erwähnten Informationen auch Informationen bezüglich relevanter Clients 7 in dem Inventory 10 hinterlegen.

Nur im Fall einer erfolgreichen Prüfung bezieht der lokale Registrierungsdienst 11 des Operator System Servers 4 stellvertretend für das Austauschgerät 8 das entsprechende operative Zertifikat mittels eines entsprechenden Certification Signing Requests 29 und einer korrespondierenden Zuweisung 30 von der der zweiten Hierarchie 5b der Zertifizierungsstelle 5. Das operative Zertifikat wird abschließend von dem Distribution-Dienst 15 des ersten lokalen Registrierungsdienstes 11 des Operator System Servers 4 über eine Zuweisung 31 an das Austauschgerät 8 übertragen. Der Distribution-Dienst 15 nutzt dabei Treiber 32 der Laufzeitumgebung 28 des Operator System Servers 4.

Eine Zuweisung der operativen Zertifikate erfolgt damit nur im Bedarfsfall und im Falle einer gültigen Autorisierung, was das durch die Zertifikatsverwaltung verursachte Kommunikationsaufkommen deutlich verringert und verhindert, dass Geräte 8 und/oder Applikationen bzw. bestimmte Nutzer einen Zugriff auf das Leitsystem 1 bzw. auf Teile des Leitsystems 1 und der dazugehörigen industriellen Anlage erhalten, der nicht erwünscht ist. Gleichzeitig ist ein Austausch eines Gerätes 8 zur Laufzeit der industriellen Anlage möglich, d.h. diese muss für den Gerätetausch nicht gestoppt werden.

Eine Übertragung von Authentifizierungsdaten bzw. Zertifikaten an den Client bzw. mehrere Clients 7 kann mittels einer in einen Visualisierungsdienst 33 des Operator System Servers 4 integrierten Datenquelle 34 erfolgen.

Alle operativen Zertifikate, die der erste lokale Registrierungsdienst 11 stellvertretend für das Gerät 8 bezogen hat, werden in dem Datenspeicher 26 hinterlegt. Der Status-Dienst 13 des ersten lokalen Registrierungsdienstes 11 überwacht insbesondere das Ablaufdatum der Zertifikate. Stellt er fest, dass ein Zertifikat zeitnah abläuft, so fordert der erste lokale Registrierungsdienst 11 ein Ersatzzertifikat bei der zweiten Hierarchie 5b der Zertifizierungsstelle 5 an. Dabei wird insbesondere die aktuelle Konfiguration des Anlagennetzwerkes berücksichtigt.

Der Notifier-Dienst 14 des ersten lokalen Registrierungsdienstes 11 überprüft insbesondere, ob ein Gültigkeitsdatum der sich im Softwareinventar 10 befindlichen operativen Zertifikate zeitnah abläuft. In diesem Fall erzeugt er über die Laufzeitumgebung 28 des Operator System Servers 4 eine entsprechende Diagnose-Meldung (Alarm), so dass Bediener des Leitsystems 1 bzw. Wartungspersonal über eine entsprechende Ausgabe in sogenannten Alarm Controls der Clients 7 informiert werden, um darauffolgend entsprechende Handlungen vorzunehmen. Auch regiert der Notifier-Dienst 14 auf weitere, für die Zertifikatsverwaltung relevante Konfigurationsänderungen in der technischen Anlage, indem er entsprechende Meldungen an den Bediener generiert.

Ein weiterer Unterdienst des ersten lokalen Registrierungsdienstes 11 ist der Status-Dienst 13. Der Status-Dienst 13 ermittelt zur Laufzeit des Leitsystems 1 einen aktuellen Status der genutzten operativen Zertifikate. Eine Statusinformation kann beispielsweise die Anzahl und Art der Zertifikate sein, welche von den Geräten/Applikationen 8 genutzt wird. Auch kann der Status-Dienst 13 erfassen, ob gegenwärtig noch operativen Zertifikate durch den Distribution-Dienst 15 zugeteilt werden bzw. ob zukünftig noch Zertifikate zugeteilt werden müssen. Auch kann der Status-Dienst 13 eventuell auftretende Fehler bei der Authentifizierung bzw. Zertifikatvergabe protokollieren.

Durch die zuvor anhand der Figuren beschriebenen Merkmale erreicht die Erfindung, dass eine unerwünschte bzw. unerlaubte Validierung eines im Kontext eines (korrekten) Engineering-Projekts P1, P2 ausgestellten Gerätezertifikats in einem anderen (falschen) Engineering-Projekt P1, p2 nicht mehr möglich ist. Denn die für die Zertifikatsverwaltung erforderlichen Parameter (insbesondere eine Zertifikatskette samt den öffentlichen Schlüsseln (PKI) der beteiligten Zertifizierungsstellen 5) sind nur im Kontext des "korrekten" Engineering-Projekts P1, P2 (in dem dazugehörigen Teilinventar 10a, 10b, 10c) verfügbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen

## Patentansprüche

1. Leitsystem für eine technische Anlage, umfassend:
- ein lokaler Registrierungsdienst, der zur Authentifizierung von Geräten in dem Leitsystem ausgebildet ist,
- ein Softwareinventar, das zur Hinterlegung von Informationen bezüglich der Authentifizierung der Geräte ausgebildet ist,
- eine Zertifizierungsstelle zur Ausstellung von Zertifikaten für die Geräte,
**dadurch gekennzeichnet, dass**
- das Softwareinventar eine Mehrzahl an Teilinventaren aufweist, in welchen jeweils voneinander unabhängige Informationen bezüglich der Authentifizierung der Geräte eines bestimmten Engineering-Projektes projektbezogen hinterlegbar sind, und
- der lokale Registrierungsdienst zu einer projektbezogenen Registrierung eines Gerätes und Hinterlegung des Gerätes in einem dem jeweiligen Engineering-Projekt zugeordneten, projektbezogenen Teilinventar des Softwareinventars ausgebildet ist, und
- die Zertifizierungsstelle projektbezogen ausgebildet ist und zwei Hierarchien aufweist, wobei eine erste Hierarchie dazu ausgebildet und vorgesehen ist, projektbezogene Gerätezertifikate für die Geräte auszustellen, und wobei eine zweite Hierarchie dazu ausgebildet und vorgesehen ist, projektbezogene operative Zertifikate für die Geräte auszustellen.

2. Leitsystem nach Anspruch 1, das zusätzlich wenigstens ein Prozessdatenarchiv umfasst, wobei das Software-inventar in dem Prozessdatenarchiv integriert ist.

3. Leitsystem nach einem der Ansprüche 1 oder 2, das zusätzlich wenigstens eine Engineering-Komponente und/oder wenigstens ein Bediensystem umfasst, wobei der lokale Registrierungsdienst in der Engineering-Komponente und/oder in dem Bediensystem integriert ist.

4. Leitsystem nach einem der vorangegangenen Ansprüche, bei dem jede der beiden Hierarchien der Zertifizierungsstelle jeweils eine Stammzertifizierungsstelle und eine Ausstellungszertifizierungsstelle umfasst.

5. Leitsystem nach einem der vorangegangenen Ansprüche, bei dem die von der ersten Hierarchie der Zertifizierungsstelle ausstellbaren Gerätezertifikate eine eindeutige Projektkennung aufweisen.

6. Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Softwareinventar und eine Zertifizierungsstelle aufweist, das Verfahren folgende Schritte umfassend:
a) Im Rahmen einer Authentifizierung des Geräts innerhalb des Leitsystems Ermittlung von Informationen durch den wenigstens einen lokalen Registrierungsdienst, dahingehend, welche Kommunikationsprotokolle und/oder Anwendungen von dem Gerät unterstützt werden und/oder aktiv sind;
b) Anforderung eines projektbezogenen Gerätezertifikats bei der ersten Hierarchie der Zertifizierungsstelle durch den lokalen Registrierungsdienst;
c) Hinterlegung des projektbezogenen Gerätezertifikats in einem dem Engineering-Projekt zugeordneten Teilinventar des Software-Inventars des Leitsystems.

7. Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Software-Inventar und eine Zertifizierungsstelle aufweist, das Verfahren folgende Schritte umfassend:
a) Anforderung eines projektbezogenen operativen Zertifikats durch ein Gerät bei dem lokalen Registrierungsdienst;
b) Prüfung durch den lokalen Registrierungsdienst, ob für das die Anforderung stellende Gerät im Rahmen des Engineering-Projekts, in dem das Gerät die Anforderung stellt, ein entsprechendes projektbezogenes Gerätezertifikat in einem dem Engineering-Projekt zugeordneten Teilinventar des Software-Inventars des Leitsystems hinterlegt ist;
c) Anforderung eines projektbezogenen operativen Zertifikats bei der ersten Hierarchie der Zertifizierungsstelle durch den lokalen Registrierungsdienst;
d) Weiterleitung des projektbezogenen operativen Zertifikats an das Gerät.

8. Verfahren zur projektbezogenen Authentifizierung eines Geräts in einem Leitsystem für eine technische Anlage im Rahmen eines Engineering-Projekts, wobei das Leitsystem wenigstens einen lokalen Registrierungsdienst, wenigstens ein Software-Inventar und eine Zertifizierungsstelle aufweist, das Verfahren folgende Schritte umfassend:
a) Im Rahmen einer Authentifizierung des Geräts innerhalb des Leitsystems Ermittlung von Informationen durch den wenigstens einen lokalen Registrierungsdienst, dahingehend, welche Kommunikationsprotokolle und/oder Anwendungen von dem Gerät unterstützt werden und/oder aktiv sind;
b) Anforderung eines projektbezogenen Gerätezertifikats bei der ersten Hierarchie der Zertifizierungsstelle durch den lokalen Registrierungsdienst;
c) Hinterlegung des projektbezogenen Gerätezertifikats in einem dem Engineering-Projekt zugeordneten Teilinventar des Software-Inventars des Leitsystems;
d) Anforderung eines projektbezogenen operativen Zertifikats durch ein Gerät bei dem lokalen Registrierungsdienst;
e) Prüfung durch den lokalen Registrierungsdienst, ob für das die Anforderung stellende Gerät im Rahmen des Engineering-Projekts, in dem das Gerät die Anforderung stellt, ein entsprechendes projektbezogenes Gerätezertifikat in einem dem Engineering-Projekt zugeordneten Teilinventar des Software-Inventars des Leitsystems hinterlegt ist;
f) Anforderung eines projektbezogenen operativen Zertifikats bei der ersten Hierarchie der Zertifizierungsstelle durch den lokalen Registrierungsdienst;
g) Weiterleitung des projektbezogenen operativen Zertifikats an das Gerät.

9. Verwendung eines Leitsystems (1) gemäß einem der Ansprüche 1 bis 5 zum Betrieb einer technischen Anlage.
